# EUROPÄISCHE PATENTANMELDUNG

(11) **EP 1 004 836 A2**
(43) Veröffentlichungstag der Anmeldung: **31.05.2000**
(21) Anmeldenummer: 99121945.2
(22) Anmeldetag: 09.11.1999
(51) Int. Cl.: F25D 23/06, F25D 11/02, B29C 44/34

(54) **Mehrtemperaturen-Kältegerät**

(30) Priorität: 24.11.1998 DE 19854231
(71) Anmelder: BSH Bosch und Siemens Hausgeräte GmbH, 81669 München (DE)
(72) Erfinder: Ballarin, Jürgen, 89537 Giengen (DE)

(57) **Zusammenfassung**

Kurzauszug bei einem Mehrtemperaturen-Kältegerät mit einem wärme-isolierenden Gehäuse (10) und mit einer Tür, sowie wenigstens zwei dahinterliegend angeordneten Kältefächern (13,14,15) unterschiedlicher Temperatur, welche durch einen wärmeisolierenden Zwischenboden (16) voneinander getrennt sind und welche von einer sich über beide Kältefächer erstreckenden, den Zwischenboden (16) umgrenzenden Innenverkleidung (12) ausgekleidet sind, zu welcher im Abstand eine Außenverkleidung (11) angeordnet ist, wobei durch den Abstand ein Zwischenraum (23) gebildet ist, welcher mit in flüssigen Ausgangskomponenten eingebrachten Wärmeisolationsmaterial (24) verfüllt ist, ist wärmeisolationsseitig zumindest eine Entlüftungsleitung (18) vorgesehen, welche mit einem ihrer freien Enden (20) zumindest im Nahbereich der am höchsten liegenden Stelle oder des am höchsten liegenden Bereiches am Zwischenboden (16) angeordnet ist, während ihr zweites freies Ende wärmeisolationsseitig an den Ort geführt ist, welchen das in den Zwischenraum (23) eingebrachte Wärmeisolationsmaterial (24) zumindest annähernd zuletzt erreicht.

## Beschreibung

Die Erfindung betrifft ein Mehrtemperaturen-Kältegerät mit einem wärmeisolierendem Gehäuse und mit einer Tür sowie wenigstens zwei dahinterliegend angeordneten Kältefächern unterschiedlicher Temperatur, welche durch einen wärmeisolierenden, in den Gehäuseaufbau integrierten Zwischenboden voneinander getrennt sind und welche von einer sich über beide Kältefächer erstreckenden Innenverkleidung ausgekleidet sind, zu welcher im Abstand eine Außenverkleidung angeordnet ist, wobei durch den Abstand ein Zwischenraum gebildet ist, welcher mit den flüssigen Ausgangskomponenten eingebrachten Wärmeisolationsmaterial verfüllt ist.

Bei Kältegeräten, wie beispielsweise bei Kühl- oder Gefriergeräten ist es bekannt, deren Gehäuse mit einem in flüssigen Ausgangskomponenten zwischen einer Innen- und einer Außenverkleidung eingebrachten Wärmeisolationsmaterial wärmedämmend auszubilden. Bei einer der zum Eintragen des Wärmeisolationsmaterials dienenden Schäumtechniken liegt der mit Wärmeisolationsmaterial zu verfüllende, vor dem Ausschäumprozeß im wesentlichen aus einer Innen- und einer Außenverkleidung gebildete Gehäuseaufbau auf der Rückseite der Außenverkleidung. Die Eintragepositionen für das Wärmeisolationsmaterial sind bei dieser Schäumtechnik in der Decken- bzw. Bodenwand der Außenverkleidung, im Bereich der späteren Gehäuserückwand, vorgesehen. Bei dieser Art von Schäumtechnik hat sich in der Vergangenheit gezeigt, daß die an die Innenverkleidung einstückig mitangeformten Vorsprünge zur Herstellung der späteren wärmeisolierten Zwischenböden, welche beispielsweise als wärmeisolierende Trennung zwischen einem Kühlfach und einem Drei-Sterne-Gefrierfach oder einem Null-Grad-Fach und einem Kühlfach angeordnet sind, sich aufgrund der unterschiedlichen Strömungsgeschwindigkeiten innerhalb des Zwischenraums, sich nicht vollkommen mit Wärmeisolationsmaterial verfüllen lassen, so daß Lufteinschlüsse im Endbereich der Zwischenböden entstehen. Diese Lufteinschlüsse beeinträchtigen nicht nur das Wärmeisolationsvermögen des Zwischenbodens, sondern vermindern auch dessen statische Steifigkeit. Um die Lufteinschlüsse am freien Ende der Zwischenböden zu vermeiden, wurden in dem das freie Ende der Zwischenböden bildenden Teil der Innenverkleidung sogenannte Entlüftungslöcher eingebracht. Diese Entlüftungslöcher werden jedoch häufig durch einen zum Abstützen der Innenverkleidung während des Aufschäumvorgangs dienenden Schäumkern abgedeckt, wodurch die beim Eintragen der Wärmeisolation im Zwischenraum verdrängte Luft nicht mehr entweichen konnte. Außerdem ist durch die Entlüftungsöffnungen die Gefahr gegeben, daß das flüssige Wärmeisolationsmaterial über diese austritt und sowohl die Innenverkleidung kühlraumseitig als auch den zur Abstützung der Innenverkleidung während des Ausschäumvorganges dienenden Schäumkern verunreinigt. Ferner ist durch die Entlüftungsöffnungen die Möglichkeit eröffnet, daß über die Öffnungen Feuchtigkeit in die Wärmeisolation eindiffundiert und deren wärmeisolierende Wirkung im Laufe der Zeit nachhaltig herabsetzt.

Um diesen Nachteilen entgegenzutreten, hat man versucht an Hand von in die Hauptströmungsrichtung des unter Druck in den Zwischenraum eingebrachten Wärmeisolationsmaterials Strömungsbarrieren anzuordnen, durch welche wenigstens eine annähernd vergleichsmäßige Ausbreitung des Wärmeisolationsmaterials, insbesondere zum freien Ende der später als Zwischenböden dienenden freitragenden Vorsprünge der Innenverkleidung hin zu erreicht werden sollte. Auch bei dieser Maßnahme konnten Lufteinschlüsse im kritischen Bereich bei Zwischenböden, insbesondere bei Geräten, deren Innenraum mit mehreren Zwischenböden unterteilt war, nicht stets sicher vermieden werden.

Der Erfindung liegt die Aufgabe zugrunde, bei einem Mehrtemperaturen-Kältegerät gemäß dem Oberbegriff des Anspruches 1 mit einfachen Maßnahmen die Nachteile des Standes der Technik zu vermeiden.

Diese Aufgabe wird gemäß der Erfindung dadurch gelöst, daß wärmeisolationsseitig zumindest eine Entlüftungsleitung vorgesehen ist, welche mit einem ihrer freien Leitungsenden zumindest im Nahbereich des freien Endes des Zwischenbodens angeordnet ist, während ihr zweites freies Leitungsende wärmeisolationsseitig an den Ort geführt ist, welchen das in den Zwischenraum eingebrachte Wärmeisolationsmaterial zumindest annähernd zuletzt erreicht.

Durch die Positionierung und Anordnung der Entlüftungsleitung ist ausschließlich wärmeisolationsseitig eine Entlüftung für die durch das in den Zwischenraum einströmenden Wärmeisolationsmaterial verdrängte Luft geschaffen, ohne durch diese Maßnahme eine negative Einflußnahme auf die Funktion des Kältegerätes bzw. des zum Ausschäumvorgang zur Anwendung kommenden Stützwerkzeuges herbeizuführen. Durch die Entlüftungsleitung ist eine zumindest weitestgehend homogene Verteilung und gleichzeitig eine vollständige Verfüllung des durch die Außen- und die Innenverkleidung gebildeten Zwischenraums, insbesondere des freien Endes des Zwischenbodens bewirkt, wodurch für das Kältegerät eine hinsichtlich ihrer Wärmedämmeigenschaften zumindest weitestgehend optimierte Wärmeisolation erzeugt ist. Durch die Verlegung des zweiten freien Leitungsendes an den gegebenenfalls empirisch zu ermittelden Ort, welcher vom aufschäumenden Wärmeisolationsmaterial zuletzt erreicht ist, ist stets eine einwandfreie Entlüftung und somit vollständige Befüllung des Zwischenraumes insbesondere des freien Endes des oder der Zwischenböden mit Wärmeisolationsmaterial sichergestellt. Darüberhinaus ist die Einbringung einer Entlüftungsleitung gegenüber den bekannten Entlüftungsmaßnahmen deutlich kostengünstiger.

Gemäß einer bevorzugten Ausführungsform des Gegenstandes der Erfindung ist vorgesehen, daß das zweite freie Leitungsende der Entlüftungsleitung zumindest annähernd in den Bereich des freien türseitigen Endabschnitts der wärmeisolierten Decken- oder Bodenwandung des Gehäuses geführt ist.

Durch eine derartige Verlegung der Entlüftungsleitung ist ohne den Ort, welcher vom Wärmeisolationsmaterial zuletzt erreicht ist, empirisch festlegen zu müssen, eine in der Praxis mit ausreichender Sicherheit funktionierende Entlüftung für Mehrtemperaturen-Kältegerätgehäuse bereitgestellt, insbesondere wenn diese mit in Ausschäumlage obenliegenden Zugangsöffnungen zu ihren Kältefächern mit Wärmeisolation verfüllt werden.

Nach einer weiteren bevorzugten Ausführungsform des Gegenstandes der Erfindung ist vorgesehen, daß das zweite freie Leitungsende der Entlüftungsleitung zumindest annähernd in den durch das freie Ende einer der Seitenwände und das freie Ende der Deckenwand des Gehäuses gebildeten Eckbereich herangeführt ist.

Durch eine derartige Leitungsführung des zweiten freien Leitungsendes ist dieses zugleich besonders rasch und positionssicher in der Großserienfertigung ohne zusätzliche Positionierhilfen an den Ort bringbar, welcher für eine einwandfreie Entlüftung geeignet ist.

Besonders einfach mit geringem Kraftaufwand läßt sich die Entlüftungsleitung an die für eine optimale Entlüftung des mit Wärmeisolationsmaterial zu verfüllenden Zwischenraumes geeigneten Bereiche oder Stellen heranführen, wenn nach einer weiteren bevorzugten Ausführungsform des Gegenstandes der Erfindung vorgesehen ist, daß die Entlüftungsleitung flexibel ausgebildet ist und einen durchströmbaren Querschnitt von 7 mm² bis 40 mm² aufweist.

Besonders sicher auch während des Ausschäumvorganges des Zwischenraumes positioniert ist die Entlüftungsleitung, wenn nach einer nächsten vorteilhaften Ausgestaltung des Gegenstandes der Erfindung vorgesehen ist, daß die Entlüftungsleitung an der Innenverkleidung festgesetzt ist.

Besonders einfach und kostengünstig herstellbar ist die Entlüftungsleitung, wenn nach einer weiteren bevorzugten Ausführungsform des Gegenstandes der Erfindung vorgesehen ist, daß die Entlüftungsleitung aus Kunststoff gebildet ist. Für diese Entlüftungsleitungen lassen sich bereits in kostengünstiger Weise herstellbare Trinkhalme verwenden.

Entsprechend einer weiteren bevorzugten Ausführungsform des Gegenstandes der Erfindung ist vorgesehen, daß die Entlüftungsleitung einen kreisförmigen Querschnitt aufweist und winkelförmig ausgebildet ist, wobei der kürzere Winkelschenkel dem freien Ende des Zwischenbodens zugeordnet ist, während der längere Winkelschenkel entlang einer der Seitenwände der Innenverkleidung in den der Öffnung der Kältefächer zugewandten Übergangsbereich der Seitenwand zur Deckenwand vorgesehen ist.

Durch eine derartig ausgebildete Entlüftungsleitung ist allein durch deren Form bereits die Befestigungsposition an der Innenverkleidung festgelegt ist, wodurch die Montage der Entlüftungsleitung rasch und zielsicher durchführbar ist.

Gemäß einer letzten bevorzugten Ausführungsform des Gegenstandes der Erfindung ist vorgesehen, daß die Entlüftungsleitung am Übergang des kürzeren Winkelschenkels auf den längeren Winkelschenkel einen faltenbalgähnlich ausgebildeten Wandungsabschnitt aufweist.

Eine derartig ausgebildete Entlüftungsleitung erlaubt eine Veränderung der beiden Winkelschenkel hinsichtlich ihres Zwischenwinkels zueinander, ohne daß durch die Veränderung der durchströmbare Querschnitt durch eine Deformation der Leitungswandung der Entlüftungsleitung eingeengt wird. Für den Fall, daß als Entlüftungsleitung ein allseits bekannter Trinkhalm mit gelenkig durch einen faltenbalgähnlich ausgebildeten Wandungsabschnitt miteinander verbundenen Halmabschnitten eingesetzt ist, lassen sich die Halmabschnitte aufgrund des üblicherweise bei Trinkhalmen zum Einsatz kommenden Faltenbalgabschnitts in rastähnlichen Positionen in verschiedenen Neigungswinkeln zueinander anordnen, wodurch sich die Montage der Entlüftungsleitung, insbesondere bei einer durch Tiefziehen erzeugten Innenverkleidung deutlich erleichtert.

Die Erfindung ist in der nachfolgenden Beschreibung anhand eines in der beigefügten Zeichnung vereinfacht dargestellten Ausführungsbeispieles erläutert.

Es zeigen:
- Fig. 1: ein im Befüllungsvorgang mit Wärmeisolationsmaterial befindliches Kältegerätegehäuse, mit einem Drei-Sterne-Gefrierfach, von dessen Boden aus wärmeisolationsseitig ein Entlüftungsrohr in den öffnungsseitigen Deckenbereich des Gefrierfaches verlegt ist, in Schnittdarstellung von der Seite,
- Fig. 2: das Kältegerätgehäuse gemäß Figur 1, geschnitten entlang der Schnittlinie II-II, in Draufsicht und
- Fig. 3: das Kältegerätegehäuse in schematischer Ansicht von der Seite, bei abgenommener Seitenwand.

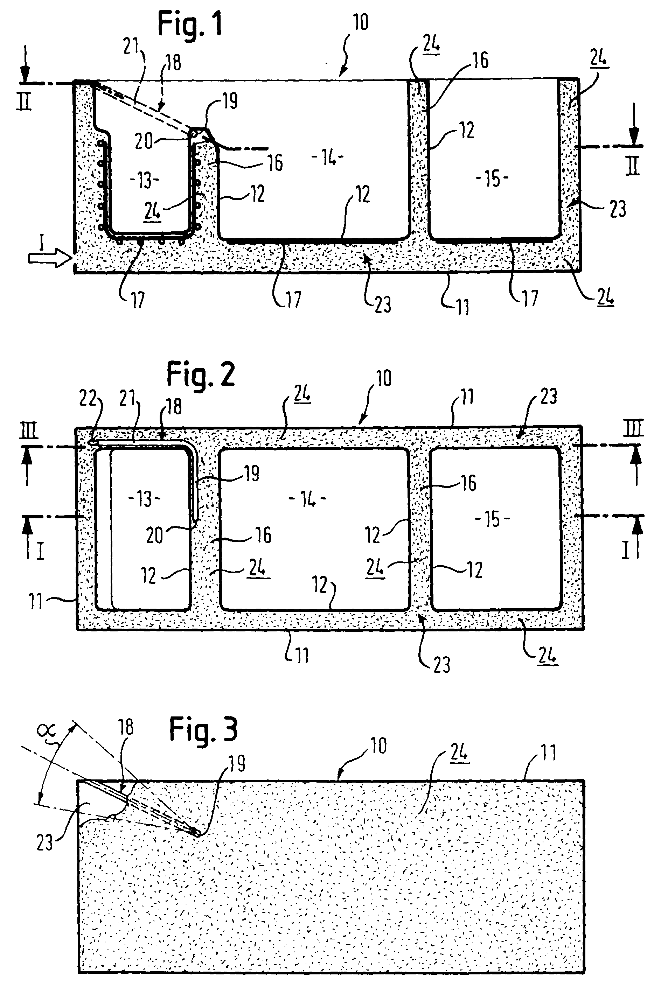

Gemäß Figur 1 ist in schematischer Darstellung ein zur Verwendung für ein Mehrtemperaturen-Kältegerät geeignetes Gehäuse 10 gezeigt, welches eine Außenverkleidung 11 und eine dazu im Abstand angeordnete, durch Tiefziehen einer Kunststoffplatine erzeugte Innenverkleidung 12 auf. In diese sind voneinander beabstandete angeordnete Kältefächer 13, 14 und 15 eingeformt, von denen das in Funtkionslage des Kältegerätes obenliegende als Gefrierfach 13, das untenliegende als Frischkühlfach 15 und das zwischen diesen liegende als Normalkühlfach 14 ausgebildet ist. Die Kältefächer 13 bis 15 sind durch ihre Beabstandung zueinander und durch die Verfüllung mit weiter unten genauer erläuterten Wärmeisolationsmaterial durch wärmeisolierende ausgeführte Zwischenböden 16 voneinander abgedämmt. Von diesen Zwischenböden 16 dient der in Funktionslage des Gehäuses 10 oben liegende und kürzer ausgeführte Zwischenboden 16 als wärmedämmende Trennmaßnahme zwischen dem Drei-Sterne-Gefrierfach 13 und dem Normal-Kühlfach 14, während der länger ausgeführte, bis nahe an den Öffnungsrand der Innenverkleidung 12 reichende Zwischenboden 16 das Frischkühlfach 15 von dem Normalkühlfach 14 wärmedämmend trennt. Zur Kühlung der drei Kältefächer 13 bis 15 sind an der Rückseite der Innenverkleidung 12, an deren an der Außenverkleidung 11 zugewandten Außenseite dem jeweiligen Kältefach zugeordnete Verdampfer 17 vorgesehen, welche als sogenannte Coldwall-Verdampfer ausgebildet sind. Neben den Verdampfern 17 ist an der Außenseite der Innenverkleidung 12 eine mit kreisförmigem Querschnitt versehene, winkelförmig geformte Entlüftungsleitung 18 vorgesehen, von welcher ein Leitungsschenkel 19 am freien Ende des den Gefrierfachboden 16 bildenden Vorsprungs vorgesehen ist, wobei Leitungsschenkel 19 mit seinem freien Leitungsende 20 zumindest im Nahbereich des freien Endes des Zwischenbodens 16 angeordnet ist und dort an der Stelle oder an dem Bereich vorgesehen ist, welcher in der in Figur 1 gezeigten Ausschäumlage des Gehäuses 10 zuletzt von einem weiter unten näher erläuterten Wärmeisolationsmaterial erreicht ist. Der Leitungsschenkel 19 ist an seinem dem Leitungsende 20 gegenüberliegenden Ende mit einem nicht näher gezeigten faltenbalgähnlich ausgebildeten Wandungsabschnitt versehen, durch welchen ein zweiter, gegenüber dem Leitungsschenkel 19 länger ausgebildeter Leitungsschenkel 21 an den ersteren Leitungsschenkel 19 strömungstechnisch angebunden ist. Der Leitungsschenkel 21 ist wie der Leitungsschenkel 19 an der von den Kältefächern abgewandten Außenseite der Innenverkleidung 12 anliegend, beispielsweise durch adhäsive Befestigungsmittel, festgesetzt. Der Leitungsschenkel 21 ist mit seinen freien Leitungsende 22 an das öffnungsseitige freie Ende des Übergangs einer der Seitenwände der Innenverkleidung 12 in deren die Decke des Gefrierfaches 13 bildenden Deckenwand geführt. Der Leitungsschenkel 21 kann auch abweichend von dieser Lage innerhalb eines Winkelbereiches α = 30° angeordnet sein, wobei der Winkelbereich symmetrisch zu der beschriebenen Lage angeordnet ist, so daß sich Toleranzbereiche für die Lage des Leitungsachenkels 21 von Δα = 15°, ausgehend von der beschriebenen Optimallage, ergeben.

Wie bereits erwähnt, ist die Innenverkleidung 12 im Abstand zur Außenverkleidung 11 angeordnet, wodurch sich zwischen den beiden ein Zwischenraum 23 ergibt, welcher mit in flüssigen Ausgangskomponenten eingebrachten Wärmeisolationsmaterial 24 verfüllt ist. Dieses wird in dem Zwischenraum 23 in der in Figur 1 gezeigten Ausschäumlage des durch die Außenverkleidung 11 und die Innenverkleidung 12 gebildeten Gehäuseaufbaus über eine in der Deckenwandung der Außenverkleidung 11 vorgesehene, aber nicht näher beschriebene Öffnung in Richtung des Pfeiles I eingebracht.

Wie insbesondere aus Figur 3 erkennbar ist, ist eine vollkommene Verfüllung des im wärmeisolierten Zustand als Zwischenboden 16 dienenden Zwischenraumes zwischen dem Gefrierfach 13 und dem Normalkühlfach 14 erreicht, obwohl das unter Druck in den Zwischenraum 23 eingebrachte Wärmeisolationsmaterial 24 entlang der Seitenwände der Innenverkleidung 12 schneller hoch steigt, als er das Gefrierfach 13 vom Normalkühlfach 14 trennende, als Zwischenboden 16 dienende Zwischenraum mit Wärmeisolationsmaterial 24 verfüllt ist. Der sich nach dem Stand der Technik ergebende, zu Schaumlunkern führende Lufteinschluß am freien Ende des Zwischenbodens 16 ist durch die Belüftung dieses freien Endes anhand der Entlüftungsleitung 18 vermieden, wodurch der durch den Abstand des Gefrierfaches 13 vom Normalkühlfach 14 sich ergebenden als Zwischenboden 16 dienende Zwischenraum vollständig mit Wärmeisolationsmaterial 24 ausgefüllt ist.

Entgegen dem dargestellten und beschriebenen Ausführungsbeispiel kann anstatt der einen Entlüftungsleitung 18 eine weitere Entlüftungsleitung zur Belüftung des freien Endes des als Gefrierfachboden dienenden Zwischenbodens 16 vorgesehen sein, wobei die Ausbildung der weiteren Entlüftungsleitung der Entlüftungsleitung 18 entspricht, während ihre Anordnung spiegelbildlich zu dieser ist. Darüber hinaus kann auch der das Normalkühlfach 14 vom Frischkühlfach 15 trennende Zwischenboden 16 an seinem freien Ende mit einer Entlüftungsleitung 18 versehen sein, welche dann mit einem Leitungsschenkel am freien Ende des Zwischenbodens 16 festgelegt ist, während der andere Leitungsschenkel an einer der Seitenwände der Innenverkleidung 12 entlanggeführt ist und mit seinem freien Ende im Bereich der durch die Innenverkleidung 12 gebildeten Bodenwandung des Frischkühlfaches 15 festgesetzt ist. Das Gehäuse 10 ist an seiner Öffnungsseite mit einer sich über alle drei Kältefächer 13 bis 15 hinwegerstreckenden, nicht dargestellten Tür verschließbar.

## Patentansprüche

1. Mehrtemperaturen-Kältegerät mit einem wärmeisolierenden Gehäuse und mit einer Tür sowie wenigstens zwei dahinterliegend angeordneten Kältefächern unterschiedlicher Temperatur, welche durch einen wärmeisolierenden, in den Gehäuseaufbau integrierten Zwischenboden voneinander getrennt sind und welche von einer sich über beide Kältefächer erstreckenden Innenverkleidung ausgekleidet sind, zu welcher im Abstand eine Außenverkleidung angeordnet ist, wobei durch den Abstand ein Zwischenraum gebildet ist, welcher mit in flüssigen Ausgangskomponenten eingebrachten Wärmeisolationsmaterial verfüllt ist, **dadurch gekennzeichnet,** daß wärmeisolationsseitig zumindest eine Entlüftungsleitung (18) vorgesehen ist, welche mit einem ihrer freien Leitungsenden (20) zumindest im Nahbereich des freien Endes des Zwischenbodens (16) angeordnet ist, während ihr zweites freies Leitungsende (22) wärmeisolationsseitig an den Ort geführt ist, welchen das in den Zwischenraum (23) eingebrachte Wärmeisolationsmaterial (24) zumindest annähernd zuletzt erreicht.

2. Gehäuse nach Anspruch 1, **dadurch gekennzeichnet,** daß das zweite freie Leitungsende (22) der Entlüftungsleitung (18) zumindest annähernd in den Bereich des freien türseitigen Endabschnitts der wärmeisolierten Decken- oder Bodenwandung des Gehäuses (10) geführt ist.

3. Gehäuse nach einem der Ansprüche 1 oder 2, **dadurch gekennzeichnet,** daß das zweite freie Leitungsende (22) die Entlüftungsleitung (18) zumindest annähernd in den durch das freie Ende einer der Seitenwände und das freie Ende der Deckenwand des Gehäuses (10) gebildeten Eckbereich herangeführt ist.

4. Gehäuse nach einem der Ansprüche 1 bis 3, **dadurch gekennzeichnet,** daß die Entlüftungsleitung (18) flexibel ausgebildet ist und einen durchströmbaren Querschnitt von 7 mm² bis 40 mm² aufweist.

5. Gehäuse nach einem der Ansprüche 1 bis 4, **dadurch gekennzeichnet,** daß die Entlüftungsleitung (18) an der Innenverkleidung (12) festgesetzt ist.

6. Gehäuse nach einem der Ansprüche 1 bis 5, **dadurch gekennzeichnet,** daß die Entlüftungsleitung (18) aus Kunststoff gebildet ist.

7. Gehäuse nach einem der Ansprüche 1 bis 6, **dadurch gekennzeichnet,** daß die Entlüftungsleitung (18) einen kreisförmigen Querschnitt aufweist und winkelförmig ausgebildet ist, wobei der kürzere Winkelschenkel (19) am freien Ende des Zwischenbodens (16) angeordnet ist, während der längere Winkelschenkel (21) entlang einer der Seitenende der Innenverkleidung (12) in den der Öffnung der Kältefächer (13, 14, 15) zugewandten Üergangsbereich der Seitenwand zur Deckenwand vorgesehen ist.

8. Gehäuse nach Anspruch 7, **dadurch gekennzeichnet,** daß die Entlüftungsleitung (18) am Übergang des kürzeren Winkelschenkels (19) auf den längeren Winkelschenkel (21) einen faltenbalgähnlich ausgebildeten Wandungsabschnitt aufweist.
